# EUROPÄISCHE PATENTSCHRIFT

(11) **EP 1 734 588 B1**
(45) Veröffentlichungstag und Bekanntmachung des Hinweises auf die Patenterteilung: **22.02.2017**
(21) Anmeldenummer: 06011805.6
(22) Anmeldetag: 08.06.2006
(51) Int. Cl.: H02S 20/23, F24J 2/52

(54) **Dacheindeckung**
Roofing system
Recouvrement de toiture

(30) Priorität: 14.06.2005 DE 102005028830
(43) Veröffentlichungstag der Anmeldung: 20.12.2006
(73) Patentinhaber: WÜRTH ELEKTRONIK GmbH & Co. KG, D-74676 Niedernhall (DE)
(72) Erfinder: Prof. Dr. Würth, Reinhold, 74676 Niedernhall (DE)
(74) Vertreter: Patentanwälte Ruff, Wilhelm, Beier, Dauster & Partner mbB

(56) Entgegenhaltungen:
- EP-A- 0 419 775
- EP-A2- 0 531 869
- WO-A-96/00827
- WO-A-97/38185
- US-A1- 2003 070 368

## Beschreibung

Die Erfindung betrifft eine Dacheindeckung für Gebäudedächer.

Es ist seit einiger Zeit bekannt, auf Gebäudedächern, insbesondere Hausdächern, Solarmodule zu installieren, die elektrischen Strom zur Verfügung stellen. Dabei ist es bislang üblich, auch bei Neubauten, das Haus zunächst konventionell mit Dachziegeln vollständig abzudecken und oberhalb der Dachziegel anschließend Solarmodule anzubringen.

Es ist auch schon vorgeschlagen worden, Dachziegel selbst als Solarmodule auszubilden. Dachziegel sind aber relativ kleinflächig, so dass die Ausbeute nur gering ist. Darüber hinaus haben Dachziegel relativ komplizierte Formen, so dass die Herstellung von Solarmodulen in Form von Dachziegeln aufwändig und teuer ist.

Es ist bereits bekannt (WO 96/00827, WO9738185) bei einem horizontal verlaufenden Dach oberhalb der herkömmlichen Dachkonstruktion eine Membran anzuordnen, und auf der Membran Solarmodule mithilfe von Profilen zu befestigen.

Zur Befestigung von Solarmodulen auf einer schräg angeordneten Unterlage sind Klammern mit einem zweifach U-förmigen Profil bekannt, die auf einer Unterlage festgeschraubt werden (EP 531 869).

Weiterhin ist es bekannt, als Tragkonstruktion für Solarmodule U-förmige Profile zu verwenden, an deren Oberseiten Klammern angebracht werden, in die die Solarmodule mit ihrem Seitenkanten eingeschoben werden können (US 2003070368

Weiterhin bekannt ist eine Solarzelleneinheit und ihre Montage auf einem Dach, wobei jede Solarzelleneinheit ein Solarzellenmodul mit einem Modulrahmen aufweist, der auf zwei einander gegenüberliegenden Seiten angenähert komplementär zueinander ausgebildete Winkelprofile bildet (DE 10 2004 015305 A1).

Ebenfalls bekannt ist ein Befestigungssystem für fotovoltaische Module, die auf Längsträgern aufliegen. Sie werden mit von oben auf die Ränder der Module einwirkenden Spannschienen gegen die Längsträger beaufschlagt. Die Spannschienen sind durchgehend. Die Längsträger sind leistenförmig (DE 20304676 U1).

Bekannt ist auch eine Vorrichtung für die Verbindung plattenförmiger Bauteile auf einem Schrägdach, beispielweise Fotovoltaikmodule, wobei die Vorrichtung ein besonders ausgebildetes Anschlussprofil vorsieht, das zwei übereinander angeordnete und in entgegengesetzte Richtungen geöffnete U-förmige Profilteile aufweist. geschieht ausschließlich an auf dem Dach montierten Querprofilen (DE 10240939 A1).

Weiterhin bekannt ist ein Bausatz zur Dachintegration von Fotovoltaikmodulen, bei dem Längsprofile vorhanden sind, auf deren Seitenflansche die Module aufgelegt werden. Die Festlegung erfolgt durch durchgehende Druckschienen, die auf die Oberseite der Module aufgelegt werden und mit in die Längsprofile eingreifenden Schrauben angepresst werden (DE 9114949 U1).

Der Erfindung liegt die Aufgabe zu Grunde, eine Dacheindeckung zu schaffen, die die Möglichkeit der Stromgewinnung bei niedrigen Herstellungskosten des Daches schafft.

Zur Lösung dieser Aufgabe schlägt die Erfindung eine Dacheindeckung mit den im Anspruch 1 genannten Merkmalen vor. Weiterbildungen der Erfindung sind Gegenstand von Unteransprüchen.

Der Grundgedanke der Erfindung besteht also darin, die Solarmodule selbst als Dacheindeckung zu verwenden, unter Verzicht auf sonstige Dacheindeckungen wie Ziegel, Wellplatten oder dergleichen. Die nach innen gerichtete Struktur der Dachkonstruktion soll dabei aber erhalten bleiben.

Nach der Erfindung wird also das Dach mit dem Dachstuhl in der bislang üblichen Weise hergestellt. Dabei können alle bisher bekannten Techniken und Erfahrungen in genau der gleichen Weise wie bisher angewendet werden. Anschließend wird das Dach nicht mit Dachziegeln abgedeckt, sondern es werden die Solarmodule an Stelle von Dachziegeln angebracht. Der Vorgang des Dachdeckens mit Dachziegeln hat sich nach Kenntnis des Erfinders der vorliegenden Anmeldung als überflüssig erwiesen, da Solarmodule die Aufgaben der Dachziegel übernehmen können. Da Solarmodule auch relativ großflächig sind, kann hier auch trotz einer möglicherweise etwas komplizierteren Arbeitsweise eine Zeitersparnis gegenüber einem normalen Dachdecken auftreten. Der Vorgang des zusätzlichen Anbringens von Solarmodulen wird hier durch den Vorgang des Dachdeckens mit den Solarmodulen ersetzt. Insgesamt tritt eine deutliche Verringerung des benötigten Zeitaufwands und des nötigen Materials auf.

Besonders sinnvoll ist es, dass bei der Dacheindeckung die Solarmodule im wesentlichen die gesamte Dachfläche abdecken.

Es wird von der Erfindung vorgeschlagen, zur Befestigung der Solarmodule getrennte Profile zu verwenden, die an der Dachlattung angebracht werden, beispielsweise angeschraubt, angenagelt oder angeklammert. Dies hat den Vorteil, dass vorhandene Solarmodule in der üblichen Plattenform verwendet werden können.

Diese Profile können beispielsweise derart ausgebildet sein, dass sie die Kanten der Solarmodule umfassen, also im Randbereich sowohl an der Oberseite als auch an der Unterseite des Solarmoduls angreifen.

Ebenfalls möglich ist es, dass Profile ein Solarmodul zwischen sich und der Dachlattung festlegen.

Besonders sinnvoll ist es, die Profile so auszubilden, dass die Solarmodule in die Profile einschiebbar sind, und zwar sowohl von der Seite als auch von vorne.

Ebenfalls möglich ist es, die Profile auf die Solarmodule aufschiebbar auszugestalten.

Eine Möglichkeit, wie ein Profil ausgestaltet werden kann, um es auf das Solarmodul aufschieben zu können oder das Solarmodul in es einschieben zu können, besteht darin, es U-förmig auszugestalten. Beispielsweise wird von der Erfindung vorgeschlagen, das im Bereich der Traufe anzubringende Querprofil, das also an der Unterseite des untersten Solarmoduls angreift, U-förmig auszubilden. Dies wird von Erfindung auch für das im Bereich des Firstes anzubringende oberste Querprofil vorgesehen.

An der Verbindungsstelle zwischen übereinander angeordneten Solarmodulen ist es möglich, für die beiden Solarmodule getrennte ebenfalls U-förmige Profile zu verwenden. Dies hätte den Vorteil, für alle quer verlaufenden Kanten mit einem Typ von Profil auszukommen.

Die Erfindung schlägt jedoch vor, für die horizontal verlaufenden Verbindungsstellen zwischen den Solarmodulen ein einziges Profil zu verwenden, das sowohl das obere als auch das untere Solarmodul festlegt.

Dieses Querprofil kann so ausgebildet sein, dass es die beiden Solarmodule schuppenartig festlegt, so dass also die Unterkante des oberen Solarmoduls oberhalb der oberen Kante des unteren Solarmoduls liegt.

Es ist aber auch möglich, das Querprofil so auszubilden, dass die beiden Solarmodule in einer Ebene liegen.

Beispielsweise kann das Querprofil S-förmig ausgebildet sein.

Zur Montage der Solarmodule kann vorgesehen sein, die Profile in einer den jeweiligen Abmessungen der Solarmodule entsprechenden Länge zu verwenden.

Es ist aber ebenfalls möglich, durchgehende Längsprofile und/oder durchgehende Querprofile zu verwenden, die auch auf der Baustelle nicht abgelängt werden.

Zur Befestigung der Solarmodule an den Profilen, auf denen sie nur aufliegen, kann erfindungsgemäß die Verwendung von Klebstoff vorgesehen sein.

In nochmaliger Weiterbildung der Erfindung kann vorgesehen sein, dass die Profile eine Abdichtung für die Solarmodule aufweisen.

Die Dacheindeckung kann so vorgenommen werden, dass zunächst das unterste Querprofil und das Längsprofil für den unteren Bereich montiert wird, wobei dann die unterste Reihe von Solarmodulen von oben in das untere Querprofil eingeschoben wird. Anschließend wird auf die oberen Kanten der Solarmodule das nächste Querprofil aufgeschoben und dieses mit der Dachlattung verbunden. Man kann so fortschreitend von unten nach oben das Dach eindecken.

Auch die umgekehrte Möglichkeit ist vorgesehen, bei der also zunächst ein U- Profil im Bereich des Firstes montiert und die Solarmodule von unten in dieses Profil eingeschoben werden. Anschließend kann dann das jeweils nächste untere Querprofil auf die unteren Kanten der Solarmodule aufgeschoben und befestigt werden. Auf diese Weise kann man sich von oben nach unten vorarbeiten.

Weitere Merkmale, Einzelheiten und Vorzüge der Erfindung ergeben sich aus den Ansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Figur 1: schematisch ein Hausdach, das vollständig mit Solarmodulen gedeckt ist;
- Figur 2: schematisch die Anordnung der Solarmodule im Verhältnis zu den parallel zum First verlaufenden Dachlatten;
- Figur 3: die Ansicht eines vom First zur Traufe anzuordnenden Längsprofils;
- Figur 4: vereinfacht die Seitenansicht eines Querprofils bei einer ersten Ausführungsform;
- Figur 5: eine der Figur 4 entsprechende Darstellung einer zweiten Ausführungsform;
- Figur 6: eine den Figuren 4 und 5 entsprechende Darstellung einer weiteren Ausführungsform;
- Figur 7: die Seitenansicht einer nochmals weiteren vereinfachten Ausführungsform;
- Figur 8: ein weiteres Querprofil;
- Figur 9: die Anbringung des unteren Solarmoduls im Bereich der Traufe;
- Figur 10: die Befestigung des obersten Solarmoduls;
- Figur 11: eine der Figur 3 entsprechende Darstellung eines weiteren Längsprofils;
- Figur 12: eine der Figur 11 entsprechende Darstellung einer nochmals weiteren Ausführungsform eines Längsprofils;
- Figur 13: die Ansicht eines gegenüber den Ausführungsformen nach Figur 11 und 12 nochmals geänderten Längsprofils.
- Figur 14: die perspektivische Ansicht eines Teils eines Längsprofils;
- Figur 15: die Stirnansicht des Längsprofils der Figur 14 mit angedeuteten benachbarten Solarmodulen;
- Figur 16: in vergrößertem Maßstab eine der Figur 15 entsprechende Darstellung bei einer weiteren Ausführungsform der Erfindung;
- Figur 17: einen Querschnitt durch ein Tragprofil zur Aufnahme eines Längsprofils.

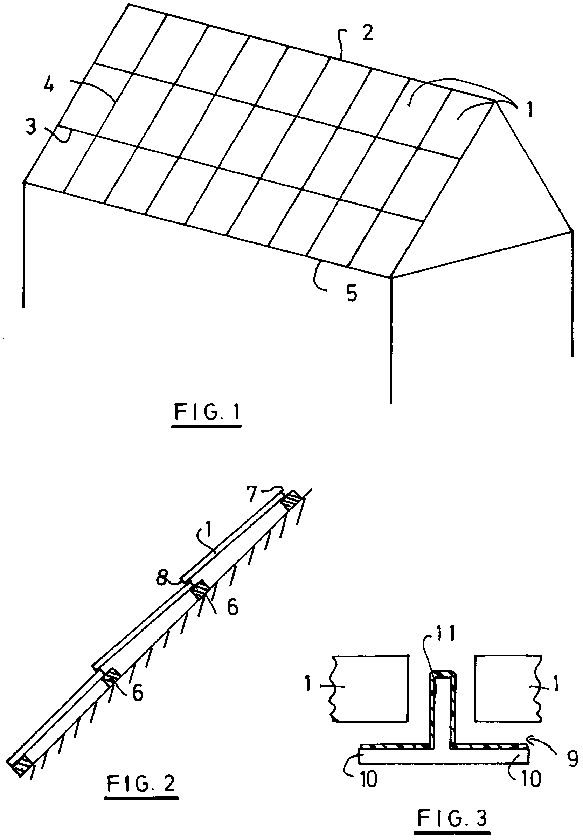

Die in den Figuren 3 und 11 bis 13 dargestellten Profile gehören nicht zur Erfindung, erleichtern aber das Verständnis der Erfindung. Figur 1 zeigt stark vereinfacht den Aufbau eines Hausdaches, das mit Solarmodulen 1 gedeckt ist. Das Hausdach weist eine übliche Konstruktion mit einem Firstbalken 2 und einer Dachlattung auf. Die Solarmodule haben alle die gleiche Größe und die gleiche Form. Zwischen ihnen sind Querfugen 3 gebildet, die parallel zum First 2 verlaufen, sowie Längsfugen 4, die vom First 2 bis zu der der Dachtraufe 5 entsprechenden Kante verlaufen.

Figur 2 zeigt die Art der Anbringung der Solarmodule 1 an dem Dach. Das Dach hat, wie bereits erwähnt, eine übliche Konstruktion mit Wärmedämmung und parallel zum First verlaufenden Dachlatten 6. Diese Einzelheiten der Dachunterkonstruktion sind nicht dargestellt, da an ihnen nichts geändert wird. Dargestellt sind in Figur 2 die Dachlatten 6. Diese werden in einem Abstand angebracht, der der Länge der Solarmodule 1 entspricht. Die Solarmodule werden geschuppt so angebracht, das ihre jeweilige obere Kante 7 auf einer Dachlatte 6 angeordnet ist und ihre jeweils untere Kante 8 auch etwa im Bereich der nächsten Dachlatte 6 liegt. Die Schuppung hat sich wegen des Abfließens von Wasser als besonders sinnvoll erwiesen, ähnlich wie bei den üblichen Dachziegeln.

Man kann der Figur 2 auch entnehmen, dass die Solarmodule 1 hinterlüftet sind, was für ihre Funktion von Vorteil ist.

Während bei der horizontal verlaufenden Verbindungsstelle 3 zwischen benachbarten Solarmodulen eine Überlappung der Solarmodule gewünscht ist, siehe Figur 2, liegen benachbarte Solarmodule an der abfallenden Verbindungsstelle 4 auf gleicher Höhe. Zu ihrer Anbringung werden Längsprofile 9 verwendet, siehe Figur 3. Diese Längsprofile haben zwei Flansche 10, die parallel zur Dachfläche und parallel zueinander verlaufen. Sie liegen in der gleichen Ebene. Zwischen beiden Flanschen 10 ist ein Steg 11 gebildet, der senkrecht zu den Flanschen 10 verläuft. Im Querschnitt haben die Längsprofile 9 also die Form eines T. In der dargestellten Ausführungsform ist die den Solarmodulen 1 zugewandte Oberseite der Flansche 10 und die beiden Seiten der Stege 11 mit einem Überzug aus einem elastischen Material versehen, das beispielsweise auch als Klebeschicht ausgebildet sein kann. In horizontaler Richtung dient diese elastische Schicht dem Längenausgleich der Solarmodule 1, der sich auf Grund von Temperaturschwankungen ergibt. Bei der Ausgestaltung der elastischen Schicht als Kleber werden damit die Solarmodule auf den Längsprofilen festgeklebt.

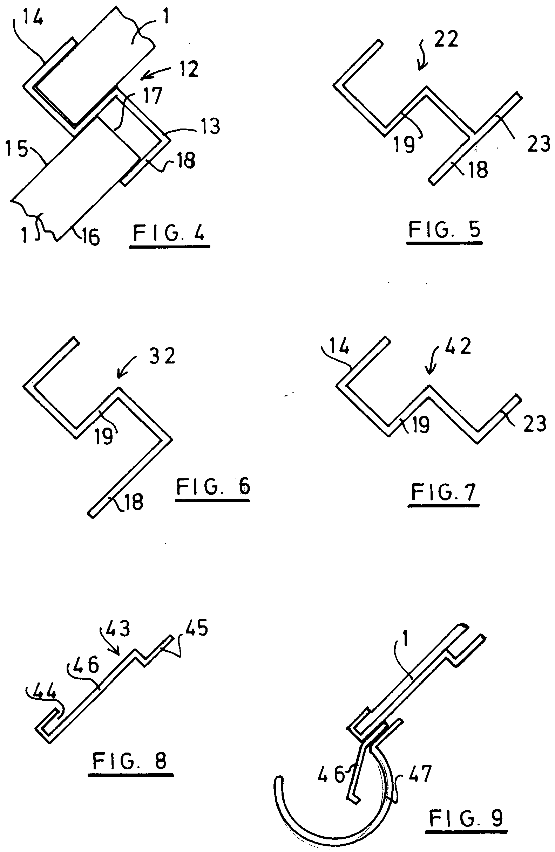

Nun zu den Querprofilen, die in den Figuren 4 bis 7 in mehreren Beispielen dargestellt sind.

Das Querprofil, dessen Querschnitt aus Figur 4 hervorgeht, weist etwa S- Form auf. Es bildet einen Abschnitt 13 für das jeweils untere Solarmodul 1, und einen Abschnitt 14 für das jeweils obere Solarmodul. Beide Abschnitte sind U-förmig ausgebildet, so dass sie sowohl an der Oberseite 15 als auch an der Unterseite 16 des jeweiligen Solarmoduls 1 angreifen. Auch diese Profile können an ihren Innenseiten mit einer elastischen Schicht oder mit einem elastischen Vorsprung verbunden sein, um eine leichte Klemmung zu bewirken. Dieses in Figur 4 dargestellte Querprofil 12 wird so auf das untere Solarmodul 1 aufgeschoben, dass zwischen dessen oberer Kante 17 und der Innenseite des Profils noch Platz bleibt, um den erforderlichen Längenausgleich zu ermöglichen. Es könnte in diesem Innenraum ebenfalls eine elastische Lippe angeordnet sein, um das Aufschieben zu vereinfachen.

Zur Befestigung des Querprofils 12 an der Dachlattung kann dieses, wenn ein durchgehendes Querprofil 12 verwendet wird, seitlich neben dem Solarmodul 1 angeschraubt oder mit einer Klammer festgelegt werden.

Figur 5 zeigt ein ähnliches Querprofil 22, das im Prinzip genauso aufgebaut ist wie das Querprofil 12 der Figur 4. Es hat jedoch zusätzlich einen Flansch 23 in Verlängerung des äußeren Schenkels 18 des Abschnitts 13 für das untere Solarmodul 1. Wenn die Solarmodule 1 von unten nach oben fortschreitend montiert werden, kann nach dem Aufschieben des Querprofils 22 auf das untere Solarmodul 1 ein Anschrauben durch den Flansch 23 hindurch oder ein Anklammern an dem Flansch 23 erfolgen. Da der Flansch 23 einen Abstand zu dem oberen Solarmodul 1 aufweist, stört eine Klammer oder ein Schraubenkopf an dieser Stelle nicht.

Figur 6 zeigt eine nochmals abgewandelte Ausführungsform eines Querprofils 32, dass sich von dem Querprofil 12 der Figur 4 durch eine Verlängerung des Schenkels 18 unterscheidet. Durch diesen Schenkel 18 hindurch kann ebenfalls ein Festschrauben an der Dachlattung erfolgen. Falls hier eine angesenkte Bohrung verwendet wird, kann ein Schraubenkopf so versenkt werden, dass er die Unterseite 16 des zugehörigen Solarmoduls 1 nicht berührt. Das Querprofil 32 der Figur 6 ist für den Fall gedacht, dass die Solarmodule von dem First ausgehend nach unten verlegt werden.

Figur 7 zeigt eine der Figur 4 entsprechende Ausführungsform eines Querprofils 42, das in diesem Fall vereinfacht aufgebaut ist. Hier wird das untere Solarmodul 1 zwischen der Oberfläche der Dachlatte 6 und einem Abschnitt 19 des Querprofils 42 festgelegt, der auf seiner anderen Seite an der Unterseite 16 des oberen Solarmoduls 1 angreift.

Bei den horizontal verlaufenden Fugen zwischen benachbarten Solarmodulen wird das Abfließen des Wassers durch die schuppenartige Anordnung der Solarmodule ermöglicht. Durch die Verwendung eines einzigen Profils an dieser Stelle kann dafür gesorgt werden, dass trotz der schuppenartigen Anordnung die Überlappung der wirksamen Flächen der Solarmodule nur geringfügig ist, so dass keinerlei Oberfläche der Solarmodule verloren geht.

Die vertikal verlaufenden Fugen zwischen den nebeneinander liegenden Solarmodulen werden durch durchgehende Metallprofile verbunden, siehe die Figur 3. Um die temperaturbedingte Ausdehnung der Solarmodule in Querrichtung auszugleichen, werden diese zwischen den Längsseiten der Solarmodule verlaufenden Profile mit einem Überzug aus einem Kunststoff versehen. Dafür wird ein langlebiger temperaturresistenter und strahlungsresistenter Kunststoff verwendet. Die Solarmodule liegen auf dem Kunststoff auf. Gleichzeitig wird durch einen langlebigen Klebstoff gewährleistet, dass entlang dieser Rinnen kein Wasser hinter die Solarzellen in die Dachholzkonstruktion eindringen kann.

Figur 8 zeigt ein weiteres Querprofil 43, das eine U-förmige Aufnahme 44 für die untere Kante 8 eines Solarmoduls 1 aufweist. Dieses Profil 43 wird mit einer Lasche 45 an der Unterkonstruktion festgeschraubt. Zwischen dem Schenkel 46 der Aufnahme 44 und der Unterkonstruktion ist Platz für den oberen Bereich des jeweils unteren Solarmoduls 1. Dadurch wird das jeweils untere Solarmodul mit Hilfe dieses Profils festgelegt und gleichzeitig eine Aufnahme für das nächsthöhere Solarmodul gebildet.

Figur 9 zeigt, dass das Querprofil 43 der Ausführungsform nach Figur 8 auch dazu verwendet werden kann, das untere Solarmodul 1 festzulegen. Hier wird zwischen der Dachlattung und dem Querprofil 43 noch ein Tropfblech 46 eingesetzt, das in die angedeutete Dachrinne 47 eingreift. An dem Tropfblech kann auch ein Sieb befestigt oder angeformt sein, um das Hineinfallen von Laub in die Dachrinne 47 zu verhindern.

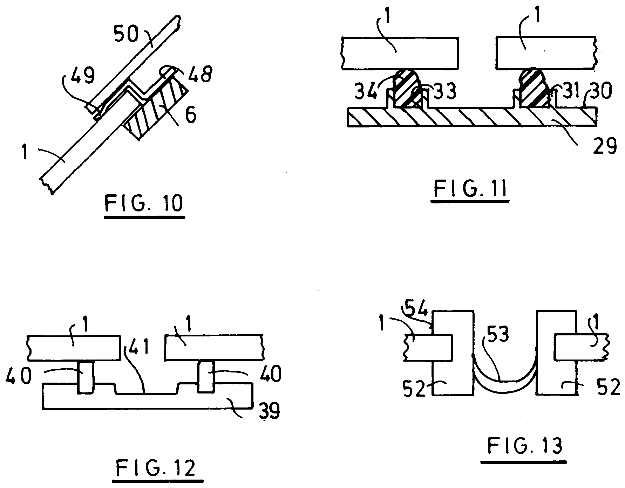

Während die Figur 9 die Anbringung des unteren Solarmoduls 1 darstellt, zeigt Figur 10 die Anbringung des Solarmoduls im oberen Bereich in der Nähe des Firstes. Hier wird bei der möglichen Befestigungsart der Solarmodule von unten nach oben die Oberkante 7 des obersten Solarmoduls 1 von einem Profil 48 festgelegt, das mit seinem einen Schenkel 49 den oberen Bereich des Solarmoduls 1 klemmend festlegt. Zu diesem Zweck ist dieser Schenkel 49 etwas federnd ausgebildet. Die Festlegung geschieht zwischen diesem Schenkel 49 und der Dachlattung 6.

Abgedeckt wird dieses Profil 48 durch ein Ortsbrett 50.

Es sollte vermerkt werden, dass es sich bei den beschriebenen Querprofilen auch um relativ kurze Klammern handeln kann.

In Figur 3 wurde eine Möglichkeit für die Ausbildung von Längsprofilen dargestellt. Die Figuren 11 bis 13 zeigen nun weitere Möglichkeiten, wie Längsprofile ausgebildet sein können. Die Längsprofile können beispielsweise als durchgehende Profile ausgebildet sein. Sie können aus Metall, beispielsweise Aluminium, bestehen. Sie können aber auch aus Kunststoff bestehen oder auch aus Kombinationen von Metallen und Kunststoff.

Bei dem Profil 29 der Figur 11 sind in der Oberseite 30 zwei Paare von Stegen 31 ausgebildet, zwischen denen Nuten 33 gebildet sind. In diese Nuten 33 sind aus elastomerem Material bestehende Profile 34 eingesetzt, die über die Außenkante der Stege 31 vorstehen. Auf diesen elastomerem Profilen 34 ruhen die Solarmodule 1 auf, die im Bereich ihrer Oberkante und Unterkante durch die Querprofile festgehalten werden. Die Ausführungsform nach Figur 11 eignet sich insbesondere dann, wenn das Längsprofil 29 aus Metall besteht, so dass die Elastomerprofile 34 nachträglich in die durch die Stege 31 gebildeten Nuten eingesetzt werden können.

Figur 12 zeigt ein Längsprofil 39, das beispielsweise aus Kunststoff besteht und in das in Längsrichtung verlaufende Kunststoffprofile 40 eingesetzt sind. In der Mitte der Quererstreckung und in der Mitte zwischen den Kunststoffprofilen 40 ist eine vertiefte Rinne 41 gebildet, die zum Ableiten von Regenwasser dient. Auch hier liegen die Solarmodule 1 auf den elastomeren Profilen 40 auf. Während das Längsprofil 39 aus eher hartem Kunststoff besteht, wird für die Profile 40 ein etwas weicherer Kunststoff bevorzugt.

Bei der Ausführungsform nach Figur 13 ist ein Längsprofil 51 vorhanden, das zwei Leisten 52 aufweist, die durch eine Rinne 53 miteinander verbunden sind. Die Rinne 53 kann aus dem gleichen Material wie die Leisten 52 bestehen, oder aber aus einem anderen gegebenenfalls weicheren Material. Die beiden Leisten 52 weisen auf ihren voneinander abgewandten Längsseiten 54 je eine Nut auf, die in ihrer Breite der Dicke der Solarmodule 1 entspricht. Die Leisten 52 werden auf die Seitenkanten der Solarmodule 1 aufgeschoben, was in Längsrichtung oder auch in Querrichtung erfolgen kann. Der Zwischenraum zwischen den beiden Leisten 52 bildet zusammen mit dem unteren durch die Rinne 53 gebildeten Abschluss einen Kanal, der zum Ableiten von Regenwasser dient. Auf Grund der Form der Rinne 53 oder auch des Materials der Rinne 53 kann hier ein Ausgleich des Abstands der beiden benachbarten Solarmodule 1 erfolgen.

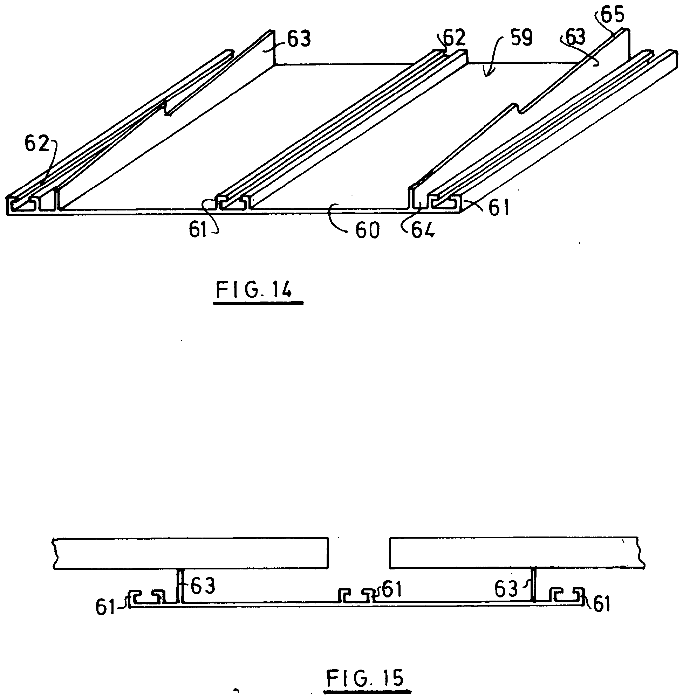

Figur 14 zeigt die perspektivische Ansicht eines Ausschnitts aus einem Längsprofil, wie es an der Verbindungsstelle zweier benachbarter Solarmodule angeordnet werden kann. Dieses Längsprofil 59 soll ähnlich angeordnet werden wie das Längsprofil 9 der Figur 3 oder die Längsprofile 29 der Figur 11 und 39 der Figur 12.

Das Längsprofil 59 der Figur 14 ist von einer Basisplatte 60 gebildet, an deren beiden Längsrändern auf der Oberseite jeweils ein hinterschnittenes Profil 61 ausgebildet ist. Das hinterschnittene Profil 61 ist nach oben hin offen und bildet dort einen Schlitz 62. Unterhalb des Schlitzes 62 verbreitert sich der Querschnitt des Profils 61, so dass eine Schraube mit ihrem Schraubenkopf im Profil 61 festgehalten sein kann, die mit ihrem Schraubenschaft durch den Schlitz 62 nach oben ragt. Selbstverständlich ist auch die umgekehrte Anordnung möglich, bei der einer Schraube mit ihrem Schaft in das Profil 61 hinein ragt und dort in eine dort geführte Mutter eingeschraubt ist.

Die Außenseite der beiden Profile 61 verläuft bündig mit dem Rand der Platte 60.

In der Mitte zwischen den beiden Längsrändern der Platte 60 ist ein identisch aufgebautes Profil 61 angeordnet, das dem gleichen Zweck dient.

Von den Längsrändern ausgehend ist hinter jedem Profil 61, das heißt parallel zu den beiden äußeren Profilen 61, ein von der Platte 60 nach oben ragender in Längsrichtung verlaufender Steg 63 angeformt. Zwischen den Profilen 61 und dem benachbarten Steg 63 ist ein schmaler Zwischenraum 64 vorhanden. Die Oberkante 65 der beiden Stege 63 ist sägezahnförmig ausgebildet. Die Höhe jedes Sägezahns oder anderes ausgedrückt die Differenz zwischen der Höhe des Stegs 63 an der tiefsten und an der höchsten Stelle entspricht der Dicke eines Solarmoduls. Dadurch wird es möglich, die Solarmodule auf die Oberseite der Stege 63 aufzuliegen, so dass sich dadurch die Schindelung selbst ergibt. Diese das Ablaufen von Regenwasser erleichternde Schindelung ist in der vorliegenden Anmeldung beispielsweise in Figur 2 dargestellt.

Dieses in Figur 14 und 15 dargestellte Profil wird in Längsrichtung angeordnet, das heißt vom First bis zur Dachtraufe. Anschließend werden die Solarmodule auf die Stege 63 aufgelegt und mit den in der vorliegenden Anmeldung beschriebenen Haken gesichert. Diese Haken werden mit Hammerkopfschrauben befestigt, deren Köpfe in den Profilen 61 angeordnet sind. Die Köpfe der Hammerkopfschrauben oder auch normale Sechskantschrauben sind in den Profilen 61 so angeordnet, dass ihr Mitdrehen verhindert wird, wenn auf den Schraubenschaft eine Mutter aufgeschraubt wird. In dem mittleren Profil 61 können ebenfalls Einrichtungen festgelegt werden, die die beiden einander zugewandten Längskanten der Solarmodule festlegen.

Es wurde bereits erwähnt, dass die Höhe der Sägezähne auf die Dicke der Solarmodule abgestimmt ist. Auch die Länge der Sägezähne, das heißt der Abstand zwischen zwei Sägezähnen, ist auf die Länge der Solarmodule abgestimmt.

Die Anordnung zweier Solarmodule 1 auf den Stegen 63 ist in Figur 10 schematisch dargestellt. Figur 15 zeigt die Stirnansicht eines Längsprofils 59 in einer Richtung vom First zu der Dachtraufe, das heißt von der Oberseite her ausgehend, ebenso wie die Figur 14.

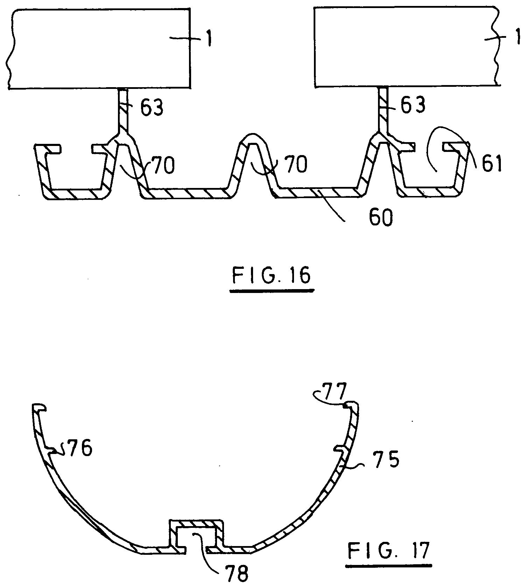

Figur 16 zeigt in etwas größerem Maßstab ein dem Profil der Figur 14 ähnliches Profil in einer Schnittdarstellung. Ausgehend von einer ebenen Unterseite 60 enthält das Profil drei nach oben gerichtete etwa gleich große Sicken 70, die etwa V-förmig ausgebildet sind. Auf den Kuppen der beiden äußeren Sicken ist jeweils ein Steg 63 ausgebildet, entsprechend dem Steg 63 der Figur 14 und Figur 15. Außerhalb der beiden die Stege 63 aufweisenden Sicken 70, das heißt im Bereich der freien Ränder des Längsprofils, ist jeweils eine nach oben offene hinterschnittene Nut 61 gebildet, die zur Aufnahme von Hammerkopfschrauben ausgebildet sind. Diese Hammerkopfschrauben werden dadurch in den Nuten 61 so gehalten, dass sie in Längsrichtung zwar verschiebbar sind, sich aber nicht verdrehen können. An diesen Hammerkopfschrauben werden Klammern befestigt, die die Solarmodule im Bereich ihres oberen und unteren Bereichs gegen die Anlagefläche der Stege 63 anlegen und festhalten.

Die Solarmodule 1 werden so angeordnet, dass zwischen ihren einander zugewandten Kanten ein Zwischenraum offen ist.

Zwischen den die beiden Stege 63 aufweisenden Sicken 70 und der mittleren Sicke 70 sind Kanäle gebildet, durch die das Wasser ablaufen kann.

Ein solches Profil kann in beliebiger Weise auf der Dachkonstruktion angebracht werden.

Mit dem Profil der Figur 16 und auch dem der Figur 14 und 15 ist es auch möglich, beispielsweise Dachverlängerungen einzudecken, also vorspringende Teile eines Daches zum Überdecken von Vorplätzen, Carports oder dergleichen. Hierzu können die Profile auf Balken aufgelegt und festgeschraubt werden, oder aber auch mithilfe des in Figur 17 dargestellten Tragprofils 75. Dieses weist etwa die Form einer Dachrinne auf und hat mit einem Abstand von dem oberen Rand einen nach innen gerichteten Flansch 76.

Dieser nach innen gerichtete Flansch 76 ist auf beiden Seiten vorhanden. Der obere Rand ist nach innen umgeformt. Der Abstand zwischen der Innenseite des oberen Randes 77 und dem Flansch 76 ist so gewählt, dass ein Längsprofil, wie es in Figur 16 dargestellt ist, in den Raum zwischen den beiden Enden des Querschnitts des Profils eingeschoben werden kann. Die Befestigung des Tragprofils 75 der Figur 17 kann mithilfe von Schrauben erfolgen, die beispielsweise in die nach unten offene hinterschnittene Nut 78 eingreifen können. Mithilfe einer solchen Tragkonstruktion ist es möglich, auch ohne eine übliche Dachkonstruktion auszukommen, beispielsweise zur Überdeckung von Carports, Pergolen oder dergleichen.

## Patentansprüche

1. Dacheindeckung für Dächer, mit
einer Tragkonstruktion und
an der Tragkonstruktion angebrachten Solarmodulen (1), die im wesentlichen die gesamte Dachfläche bilden bzw. abdecken,
wobei
die Tragkonstruktion abfallend montierte Längsprofile aufweist, die
eine Basisplatte (60) aufweisen, an deren beiden Längsrändern auf der Oberseite jeweils ein hinterschnittenes Profil (61) ausgebildet ist, deren Außenseiten bündig mit dem Rand der Platte (60) verlaufen,
wobei hinter jedem Profil (61) ein von der Platte (60) nach oben ragender in Längsrichtung verlaufender Steg (63) zur Auflage der Solarmodule (1) in deren Randbereich angeformt ist, und wobei
das hinterschnittene Profil (61) eine hinterschnittene Nut zur Aufnahme von Muttern und/oder Schraubenköpfen für Befestigungsklammern oder dergleichen zum Befestigen der Solarmodule (1) an den Längsprofilen bildet.

2. Dacheindeckung nach Anspruch 1, mit zwischen den Stegen (63) gebildeten Kanälen für das ablaufende Wasser.

3. Dacheindeckung nach Anspruch 1 oder 2, bei der die Tragkonstruktion zusätzlich Querprofile (12, 22, 32, 42) aufweist, an denen die Solarmodule (1) befestigbar sind.

4. Dacheindeckung nach Anspruch 3, bei der die Querprofile (12, 22, 32, 42) die oberen und unteren Kanten der Solarmodule (1) umfassen.

5. Dacheindeckung nach einem der Ansprüche 3 bis 4, bei der das im Bereich der Traufe (5) anzubringende untere Querprofil und/oder das im Bereich des Firstes (2) anzubringende oberste Querprofil U-förmig ausgebildet ist.

6. Dacheindeckung nach Anspruch 5, bei der die übrigen Querprofile (12, 22, 32, 42) zur Aufnahme der Kanten jeweils eines unteren und eines oberen Solarmoduls (1) ausgebildet sind.

7. Dacheindeckung nach einem der Ansprüche 3 bis 5, bei der die Querprofile (12, 22, 32, 42) S-förmig zur geschuppten Aufnahme der Solarmodule (1) ausgebildet sind.

8. Dacheindeckung nach einem der vorhergehenden Ansprüche, bei der die Länge der **Längsprofile und ggf. der Querprofile** den entsprechenden Abmessungen der Solarmodule (1) entspricht.

9. Dacheindeckung nach einem der Ansprüche 3 bis 7, bei der durchgehende Querprofile (12, 22, 32, 42) vorgesehen sind.

10. Dacheindeckung nach einem der Ansprüche 3 bis 7 oder 9, bei der durchgehende Längsprofile (9) vorgesehen sind.

11. Dacheindeckung nach einem der vorhergehenden Ansprüche, bei der die **Längsprofile und Querprofile** (9, 12, 22, 32, 42) eine Abdichtung für die Solarmodule (1) aufweisen.

12. Dacheindeckung nach einem der vorhergehenden Ansprüche, bei der die Solarmodule (1) mit den Längsprofilen (9) und/oder den Querprofilen (12, 22, 32, 42) verklebt sind.

13. Dacheindeckung nach einem der vorhergehenden Ansprüche, bei der die Längsprofile (9) und/oder die Querprofile (12, 22, 32, 42) eine Kleberschicht aufweisen.

14. Dacheindeckung nach einem der vorhergehenden Ansprüche, bei der die Stege sägezahnförmig zur geschuppten Aufnahme der Solarmodule (1) ausgebildet sind.

15. Dacheindeckung nach einem der vorhergehenden Ansprüche, bei der die Stege Bürsten zum Abstützen der Solarmodule (1) aufweisen.

16. Dacheindeckung nach einem der vorhergehenden Ansprüche, bei der die Tragkonstruktion Tragprofile (75) aufweist, in die die Längsprofile und/oder Querprofile einsetzbar sind.

## Claims

1. Roofing system for roofs, comprising
a supporting structure and
solar modules (1) attached to the supporting structure,
said modules forming or covering essentially the entire roof area, wherein
the supporting structure includes longitudinal profiles mounted in a sloping manner, which
include a base plate (60), with a respective undercut profile (61) provided on the top side of each of the two long edges thereof and the exterior sides of the profiles extend flush with the edge of the plate (60),
wherein behind each profile (61) a web (63), projecting upwards from the plate (60) and extending in the longitudinal direction, is molded on for placing the solar modules (1) with their edge zone thereon, and wherein
the undercut profile (61) constitutes an undercut groove for receiving nuts and/or screw heads for fixing clamps or the like for fixing the solar modules (1) on the longitudinal profiles.

2. Roofing system according to claim 1, with channels formed between the webs (63) for the water running off.

3. Roofing system according to claim 1 or 2, wherein the supporting structure additionally has transverse profiles (12, 22, 32, 42), on which the solar modules (1) can be fixed.

4. Roofing system according to claim 3, wherein the transverse profiles (12, 22, 32, 42) engage the upper and lower rims of the solar modules (1).

5. Roofing system according to any of claims 3 to 4, wherein the lower transverse profile to be attached in the vicinity of the eaves (5) and/or the uppermost transverse profile to be attached in the vicinity of the ridge (2) have a U-shape.

6. Roofing system according to claim 5, wherein the other transverse profiles (12, 22, 32, 42) are configured for receiving the rims of a corresponding one of a lower and an upper solar module (1).

7. Roofing system according to any of claims 3 to 5, wherein the transverse profiles (12, 22, 32, 42) are configured in an S-shape for receiving the solar modules (1) in an imbricated manner.

8. Roofing system according to any of the preceding claims, wherein the length of the longitudinal profiles and, optionally, the transverse profiles corresponds to the respective dimensions of the solar modules (1).

9. Roofing system according to any of claims 3 to 7, wherein continuous transverse profiles (12, 22, 32, 42) are provided.

10. Roofing system according to any of claims 3 to 7 or 9, wherein continuous longitudinal profiles (9) are provided.

11. Roofing system according to any of the preceding claims, wherein the longitudinal profiles and transverse profiles (9, 12, 22, 32, 42) include a sealing for the solar modules (1).

12. Roofing system according to any of the preceding claims, wherein the solar modules (1) are adhesively bonded to the longitudinal profiles (9) and/or the transverse profiles (12, 22, 32, 42).

13. Roofing system according to any of the preceding claims, wherein the longitudinal profiles (9) and/or the transverse profiles (12, 22, 32, 42) have an adhesive layer.

14. Roofing system according to any of the preceding claims, wherein the webs are sawtooth-shaped for receiving the solar modules (1) in an imbricated manner.

15. Roofing system according to any of the preceding claims, wherein the webs have brushes for backing the solar modules (1).

16. Roofing system according to any of the preceding claims, wherein the supporting structure has supporting profiles (75) and the longitudinal profiles and/or the transverse profiles are insertable therein.

## Revendications

1. Recouvrement de toiture pour des toitures, avec une construction de support et
des modules solaires (1) installés sur la construction de support, qui
forment ou recouvrent essentiellement toute la surface de la toiture,
dans lequel
la construction de support présente des profilés longitudinaux montés en pente, qui
présentent une plaque de base (60), dont les deux bords longitudinaux présentent sur le côté supérieur respectivement un profilé en contre-dépouille (61), dont les côtés extérieurs se trouvent à fleur du bord de la plaque (60),
dans lequel une nervure (63) s'étendant en direction longitudinale et orientée vers le haut à partir de la plaque (60) est formée derrière chaque profilé (61) pour l'appui des modules solaires (1) dans leur région de bord, et dans lequel
le profilé en contre-dépouille (61) forme une rainure en contre-dépouille destinée à recevoir des écrous et/ou des têtes de vis pour des attaches de fixation ou analogues pour fixer les modules solaires (1) aux profilés longitudinaux.

2. Recouvrement de toiture selon la revendication 1, avec des canaux formés entre les nervures (63) pour l'eau de ruissellement.

3. Recouvrement de toiture selon la revendication 1 ou 2, dans lequel la construction de support présente en outre des profilés transversaux (12, 22, 32, 42), sur lesquels les modules solaires (1) peuvent être fixés.

4. Recouvrement de toiture selon la revendication 3, dans lequel les profilés transversaux (12, 22, 32, 42) encadrent les bords supérieurs et inférieurs des modules solaires (1).

5. Recouvrement de toiture selon une des revendications 3 à 4, dans lequel le profilé transversal inférieur à installer dans la région de l'égout des eaux de pluie (5) et/ou le profilé transversal supérieur à installer dans la région du faîte (2) sont en forme de U.

6. Recouvrement de toiture selon la revendication 5, dans lequel les autres profilés transversaux (12, 22, 32, 42) sont réalisés de façon à recevoir les bords d'un module solaire inférieur et d'un module solaire supérieur (1) respectivement.

7. Recouvrement de toiture selon l'une quelconque des revendications 3 à 5, dans lequel les profilés transversaux (12, 22, 32, 42) sont réalisés en forme de S pour la réception imbriquée des modules solaires (1).

8. Recouvrement de toiture selon l'une quelconque des revendications précédentes, dans lequel la longueur des profilés longitudinaux et éventuellement des profilés transversaux correspond aux dimensions correspondantes des modules solaires (1).

9. Recouvrement de toiture selon l'une quelconque des revendications 3 à 7, dans lequel il est prévu des profilés transversaux continus (12, 22, 32, 42).

10. Recouvrement de toiture selon l'une quelconque des revendications 3 à 7 ou 9, dans lequel il est prévu des profilés longitudinaux continus (9).

11. Recouvrement de toiture selon l'une quelconque des revendications précédentes, dans lequel les profilés longitudinaux et les profilés transversaux (9, 12, 22, 32, 42) présentent un système d'étanchéité pour les modules solaires (1).

12. Recouvrement de toiture selon l'une quelconque des revendications précédentes, dans lequel les modules solaires (1) sont collés aux profilés longitudinaux (9) et/ou aux profilés transversaux (12, 22, 32, 42).

13. Recouvrement de toiture selon l'une quelconque des revendications précédentes, dans lequel les profilés longitudinaux (9) et/ou les profilés transversaux (12, 22, 32, 42) présentent une couche de colle.

14. Recouvrement de toiture selon l'une quelconque des revendications précédentes, dans lequel les nervures sont réalisées en forme de dents de scie pour la réception imbriquée des modules solaires (1).

15. Recouvrement de toiture selon l'une quelconque des revendications précédentes, dans lequel les nervures présentent des balais pour supporter les modules solaires (1).

16. Recouvrement de toiture selon l'une quelconque des revendications précédentes, dans lequel la construction de support présente des profilés de support (75), dans lesquels les profilés longitudinaux et/ou les profilés transversaux peuvent être insérés.
